# EUROPEAN PATENT SPECIFICATION

(11) **EP 0 647 388 B1**
(45) Date of publication and mention of the grant of the patent: **20.08.1997**
(21) Application number: 93913416.9
(22) Date of filing: 23.06.1993
(51) Int. Cl.: H05B 39/08, H02M 5/257, G05F 1/455

(54) **A POWER CONTROLLER, FOR EXAMPLE A DIMMER FOR ELECTRIC LAMPS**
LEISTUNGSREGLER, ZUM BEISPIEL DIMMER FUER ELEKTRISCHE LAMPEN
REGULATEUR DE PUISSANCE TEL QU'UN VARIATEUR POUR DES LAMPES ELECTRIQUES

(30) Priority: 23.06.1992 GB 9213291
(43) Date of publication of application: 12.04.1995
(73) Proprietor: ELECTROSONIC LIMITED, Dartford, Kent DA2 7SY (GB)
(72) Inventor: FORREST, Trevor, London SE18 2DN (GB); HEATH, Nicholas Charles, Kent DA1 5SH (GB)
(74) Representative: Maggs, Michael Norman
(86) International application number: GB9301318
(87) International publication number: WO9400965

(56) References cited:
- EP-A- 0 375 289
- WO-A-88/04875
- WO-A-90/01247
- WO-A-90/05948
- DE-U- 9 109 915
- US-A- 4 251 764
- US-A- 5 072 170

## Description

The present invention relates to a power controller, and more specifically although not exclusively to a dimmer for controlling electric lamps.

It is increasingly common for large buildings or architectural complexes, such as shopping malls, offices and entertainment complexes to include a very large number of lights controlled by a complex control system including a number of dimmers which are arranged to control different lights. In turn, the dimmers themselves are controlled by a master control unit which determines the relative intensity of the various lights in accordance with a number of selectable predetermined light intensity programs, or in accordance with some external stimuli such as ambient light levels. The specific embodiments herein described relate both to the individual dimmers, and also to the overall control system.

Conventional dimmers tend to have problems with unexpected load conditions, for example where a user has inadvertently connected too many lamps to the same dimmer, or where one of the lamps has shorted, or where because of the nature of the lamps high transient currents are created on start up. Unless such problems are properly dealt with, such unexpected conditions can damage the devices used within the dimmer, and to avoid this the general practice in the past has been to try to achieve robustness by over-specifying the devices. For example, a dimmer with a nominal full load rating of.20 amps RMS might employ devices rated at perhaps four or five times this value. This does reduce device failures due to load faults and the like, but of course significantly increases product costs.

One method of trying to reduce the overrating is to use very fast close-rated protection in the form of fuses or fast-response miniature circuit breakers. While such methods can reduce overrating to some extent, and keep device failures within acceptable bands, they do tend to introduce unexpected or "nuisance" tripping particularly in response to load transients. Such load transients are extremely common with transformer-fed tungsten, fluorescent, electronic ballast lamps and other similarly complex loads. Specifically, transients tend to occur on start up, where the user tries to switch on a large number of lamps to maximum intensity instantaneously or nearly so. Because certain lamps act effectively as short circuits before any current starts flowing, the transient currents are very much higher than the final steady state currents. Unless the user is very careful, therefore, there can be a tendency for certain types of lamp to trip the circuit breakers whenever they are switched on.

To ensure that prior art devices do not overheat, relatively large heat sinks have to be provided. For much of the time, however, the devices are not operating anywhere near their maximum permissible temperature, and the heat sink is therefore effectively an over-specification: it is required only to deal with the unusual or unexpected temperature rise that might otherwise harm the devices within the dimmer.

Most prior art dimmers control their lamps by making use of two individual control devices, connected as an inverse pair. Typically, these are SCRs. Problems can arise, however, if because of a lamp fault, or because of capacitance within the lamp, current starts flowing in the wrong direction during one of the half cycles of the power supply waveform. In that event, the wrong SCR will latch into the on position during an inappropriate part of the cycle. US-A-4 251 764 discloses those features set out in the preamble of Claim 1.

It is an object of the present invention to provide a power controller, for example a dimmer, which at least alleviates the above problems. It is a further object to incorporate such dimmers in an electric lamp control system.

According to the present invention a power controller is characterised in that a power controller comprising waveform-altering means 64 arranged selectively to alter a power waveform at an output 56 of the controller, the waveform altering means 64 operating under control of control means 10, and feedback means 74,40 arranged to provide a feedback signal to the control means 10 in dependence upon a characteristic of the controller in use, characterised in that the feedback means 74,40 includes a temperature sensor 40 providing a feedback signal to alter the power waveform at the output 50 of the controller continuously in response to the temperature of the waveform altering means 64.

In the preferred embodiment, the power controller comprises a dimmer for controlling electric lights.

In the preferred form, the feedback is of both a signal representative of the temperature at which the devices within the dimmer are operating, and also a signal representative of the current or power being supplied to the lamps which make up the load.

Desirably, the waveform-altering means comprises an inverse pair of polarity-sensitive control devices, such as SCRs. Other devices could, however, be used such as transistors, mosfets, IGBTs, or other power control elements. The concept would be the same in each case, and the difference would lie only in the nature of the hardware used to drive them.

The advantages of the present invention, in its various aspects, include the use of devices which are overrated to a much lesser extent than in the prior art, and which can be operated at or near their maximum temperature for heat sink economy. In addition, high current load surges and other transients are greatly reduced or effectively eliminated by the feedback mechanism, so enabling the devices used to be protected even in the absence of miniature circuit breakers. When there is a moderate overload, power reduction may be effected automatically, so enabling the dimmer to return to within normal working limits. In addition, current measurement of each supply half cycle allows load analysis both for power factor and for possible DC component: this allows unstable loads to be detected, and the output modified to remove such difficulties as a DC component. This facilitates the provision of a universal dimmer design for all types of lamp.

Overall, the controller of the present invention enables substantial cost savings to be made on components, while at the same time providing a substantially increased flexibility in use.

The invention may be carried into practice in a number of ways and one specific embodiment will now be described, by way of example, with reference to the accompanying drawings, in which:
Figure 1 is a circuit diagram showing the microprocessor and associated circuitry;
Figure 2 is a circuit diagram showing the input/output port and the user-operable switches;
Figure 3 is a circuit diagram showing the circuitry for the analogue inputs;
Figure 4 is a circuit diagram showing the circuitry associated with the thermal sensor;
Figure 5 is a circuit diagram showing the power supply and the timing circuit;
Figure 6 is a circuit diagram showing the two channels of the load control circuitry;
Figure 7A illustrates some features of the waveform as it is actually applied to the load;
Figure 7B shows, by way of example, the actual waveform being applied to the load when the firing angle is as shown in Figure 7A;
Figure 8 is a graph showing how the safe operating region might vary according to current and temperature;
Figure 9 is an illustrative grapn showing how in a typical case the load control might vary with the firing angle;
Figure 10 illustrates how compensation is made for changing mains voltages; and
Figure 11 shows how several devices embodying the present invention may be linked together into a larger system.

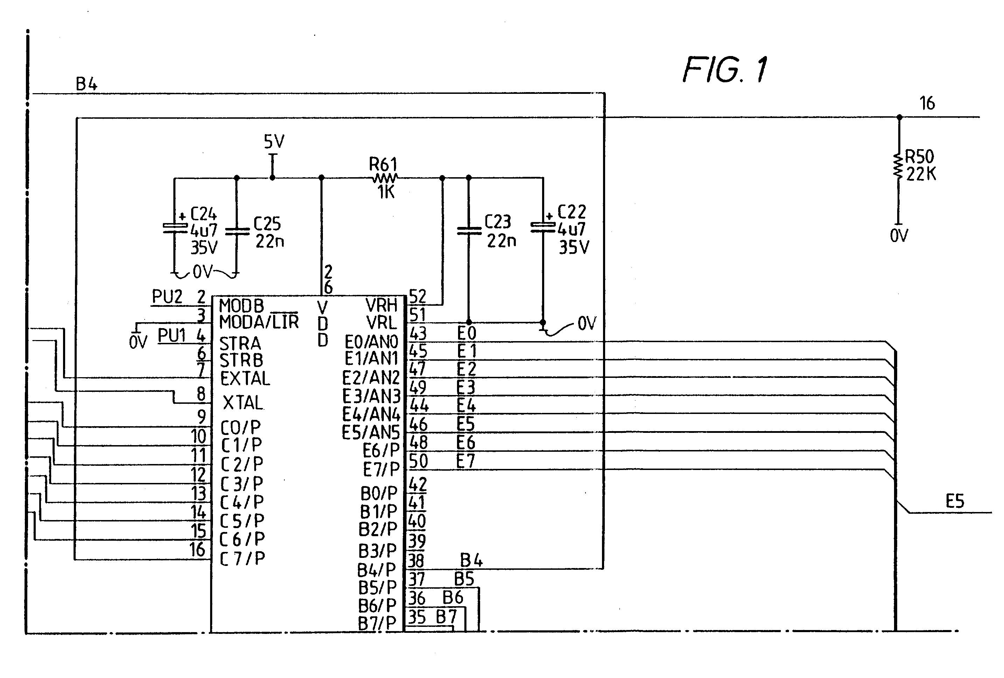

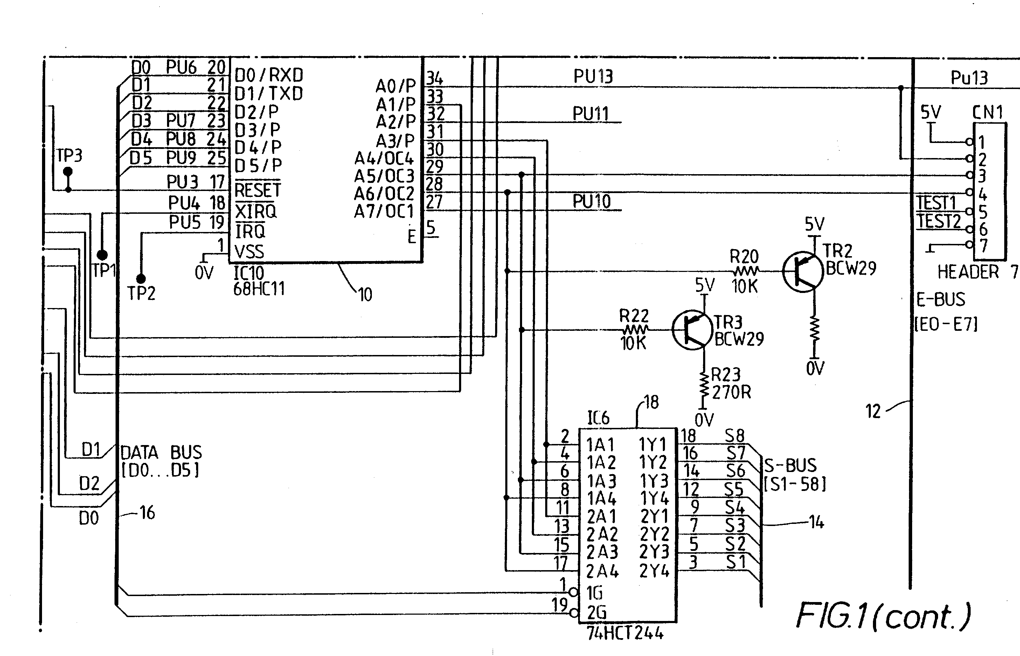

An exemplary dimmer embodying the present invention is shown in detail in Figures 1 to 6. Turning first to Figure 1, which shows the microprocessor control and associated circuitry, it will be seen that the main controlling microprocessor 10 is a Motorola chip 68HC11. The programming of the microprocessor will be described later, but for the moment it will be noted that the rest of the microprocessor-associated circuitry is conventional per se, and will accordingly not be described further here. Some of the leads via which the microprocessor 10 controls the operation of the dimmer are bussed, and attention is drawn in particular to the E-bus 12, which carries analogue signals along the lines E0 to E7, to the S-bus 14 which carries digital or logical signals on the lines S1 to S8, and to the data bus 16 which carries digital data signals along the lines DO to D5. The logical lines S1 to S8 on the S-bus are connected to the main microprocessor 10 via an interface chip 18.

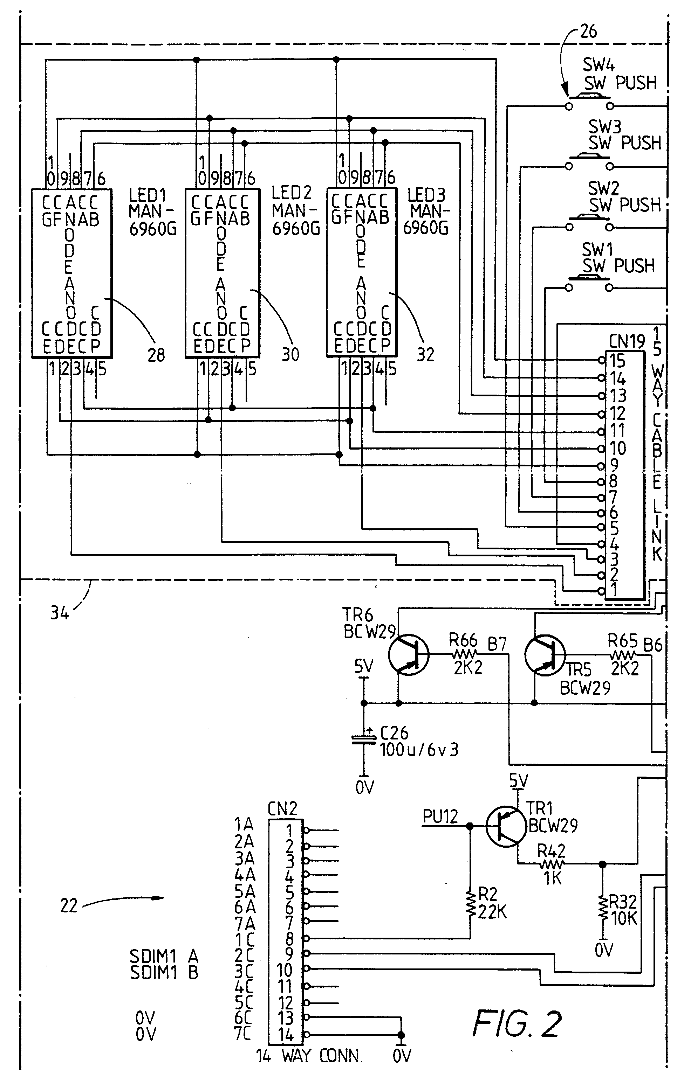

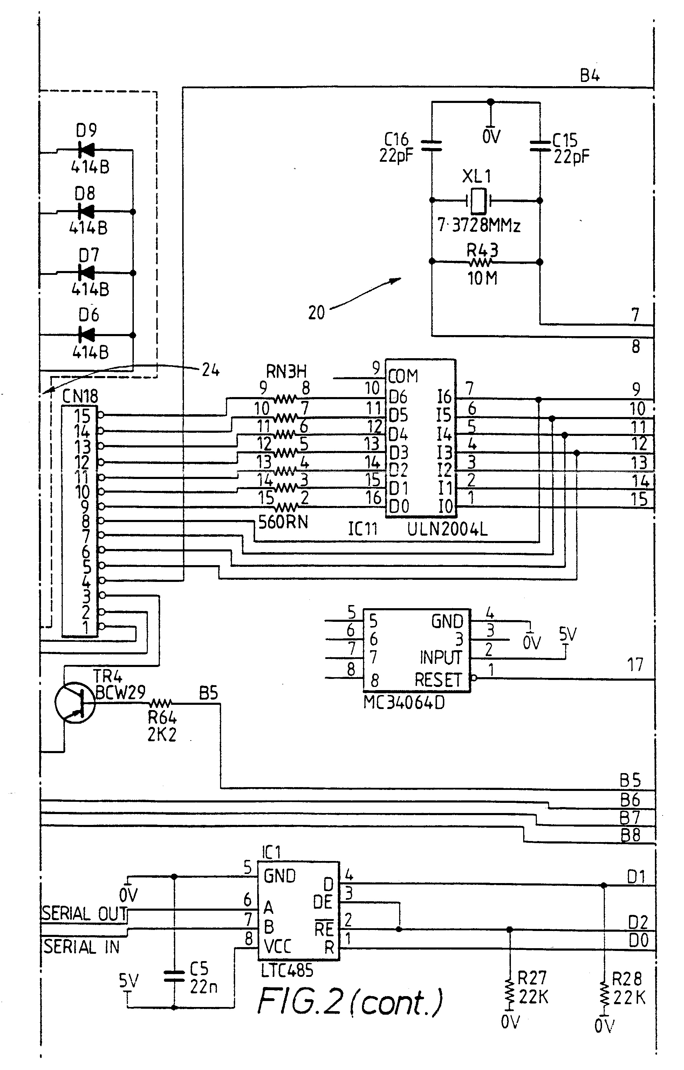

Turning now to Figure 2, this is effectively an extension off to the left-hand side of Figure 1, and for ease of reference it will be noted that Figures 1 and 2 can be aligned side by side. Apart from the oscillator circuitry 20 for the microprocessor 10, most of the circuitry shown in Figure 2 relates to the input/output side of the device. Digital control and programming of the microprocessor 10 may be effected by means of a serial I/O port 22, which may also be used for remote interrogation of the microprocessor as will be described more fully below. The device also provides for manual control and operation by way of a series of push-button switches 26, the settings of which are transmitted to the microprocessor 10 via a 15-way cable interface 24. The current position of the switches 26 is indicated by controllable LEDs 28, 30, 32. Conveniently, the switches 26 and the LEDs 28, 30, 32 are mounted on a separate daughter board, generally indicated at 34, which communicates with the rest of the device solely via the cable interface 24.

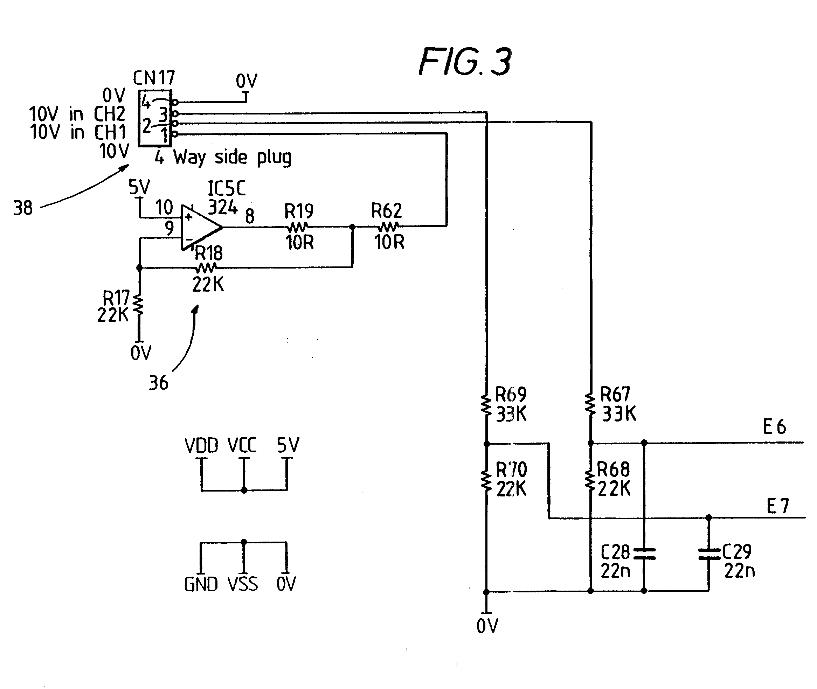

Analogue inputs to the device are provided for by means of a four-way side plug 38, shown in Figure 3. To this plug may be attached any suitable analogue control device, for example a variable potentiometer or slider so that the dimmer may be used in manual mode should the user so desire. The circuitry illustrated generally at 36 is an industry standard 10 volt reference. The input analogue signals provided by means of the plug 38 pass, after appropriate voltage reduction and filtering, along the lines E6 and E7 to the E-bus 12 shown in Figure 1.

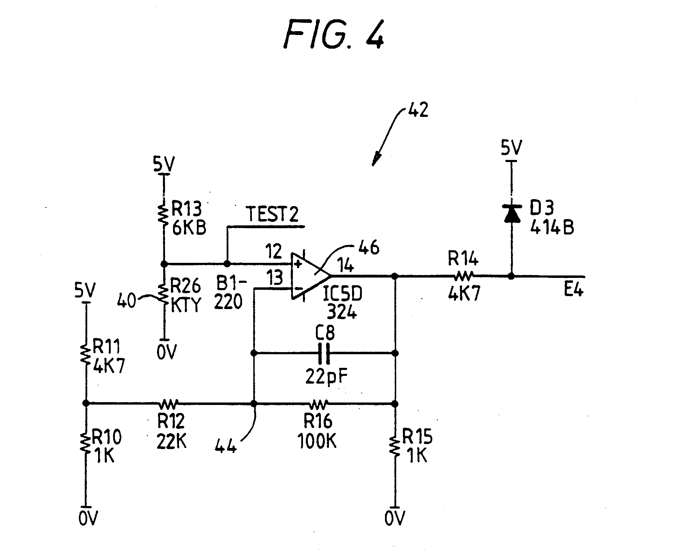

Signals representative of the temperature at which the power devices within the unit are operating is provided by the analogue circuitry of Figure 4. A thermistor 40 detects the temperature of a heat sink (not shown) with which it and the power devices are in thermal contact. The circuitry generally indicated at 42 tailors the high frequency response of the thermistor 40, for stability, following which the analogue signal is passed along the line E4 to the E-bus 12 (Figure 1). More specifically, the thermistor voltage is compared by an amplifier 46 with a reference voltage 44, the feedback loop to the amplifier providing the necessary response stabilisation.

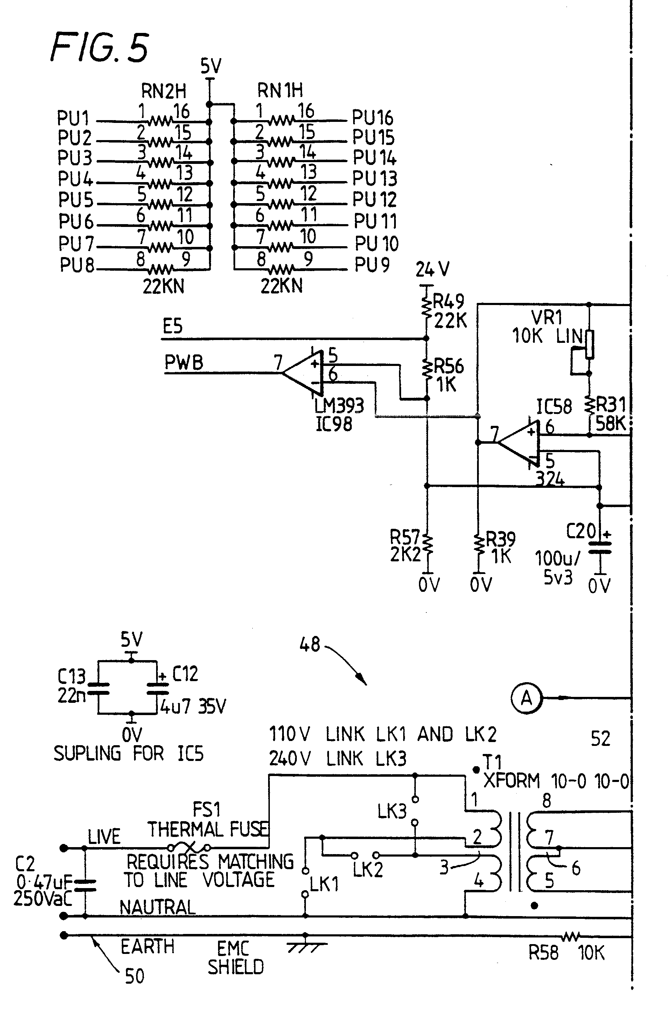

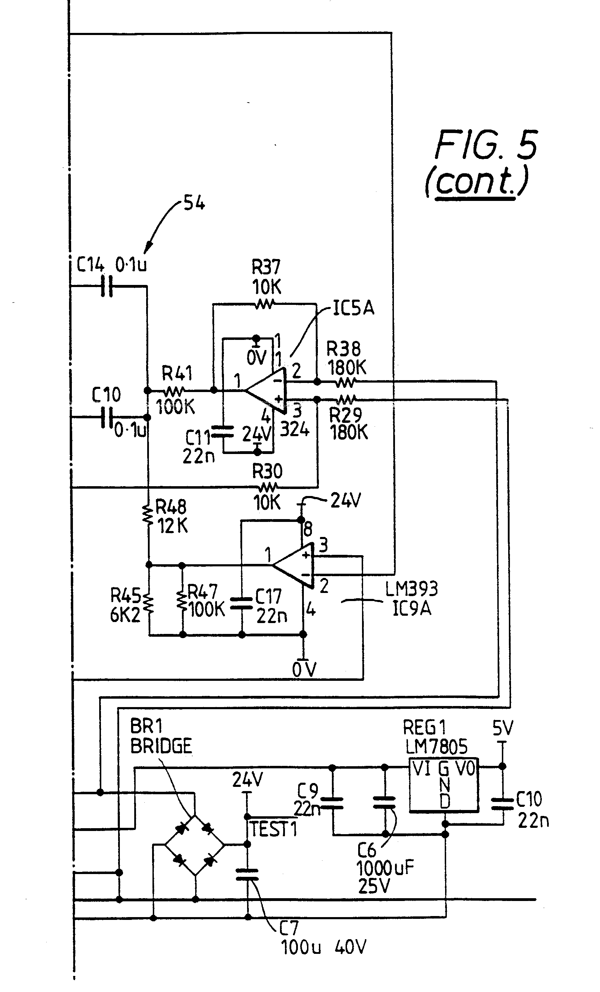

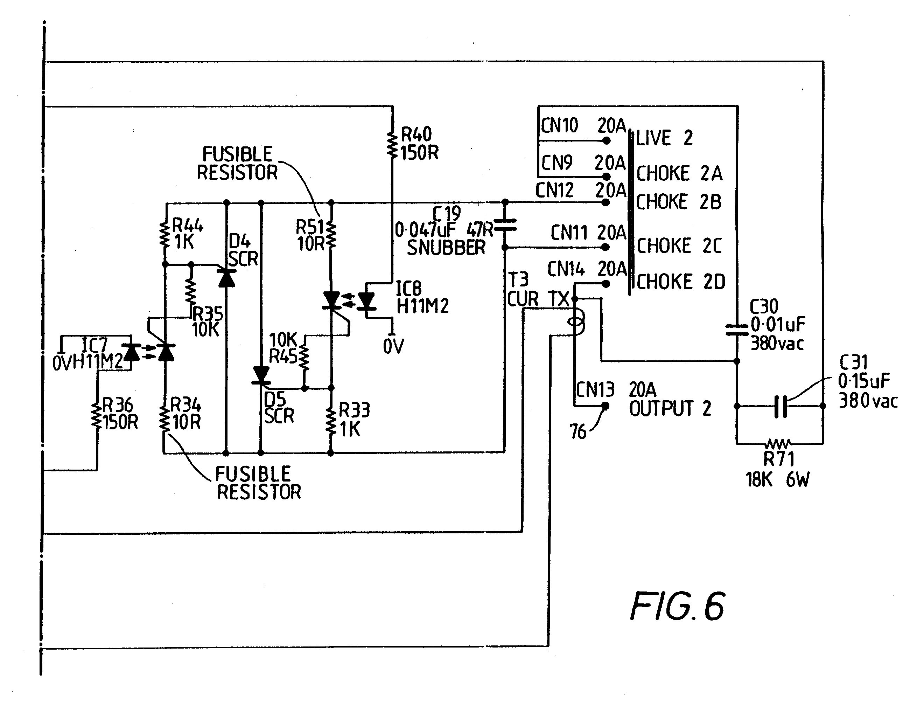

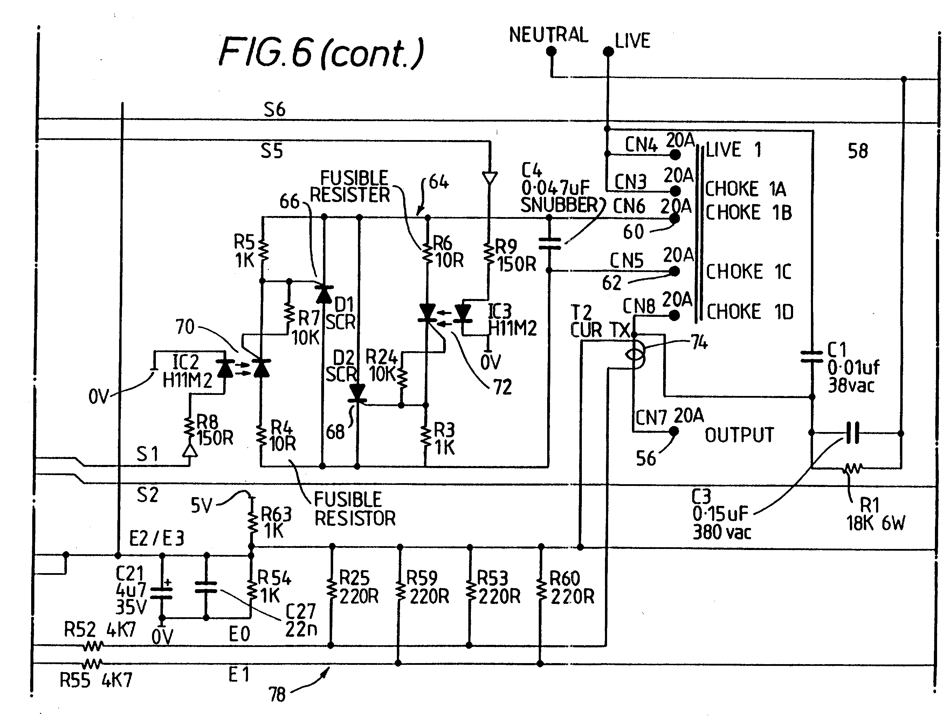

The lower portion of Figure 5 shows the power supply circuitry, generally indicated at 48. Mains power is supplied at 50 and the voltage is reduced by the transformer 52 for use in the device. The upper part of Figure 5 illustrates the timing circuitry, which is known per se. The purpose of the circuitry 54 is to provide along the line PU13, on the left-hand side of the diagram, a square wave output which closely tracks the mains supply. This signal is used by the microprocessor 10 (Figure 1) to distinguish between positive and negative half cycles. As will be seen with reference to Figure 1, the line PU13 enters on the right-hand side of that figure. There are further connections between Figures 5 and 1 at the top left of Figure 5 and the top right of Figure 1 (line 16) and below that in each case the analogue line E5, the purpose of which is merely to provide a reference voltage to the microprocessor. The point labelled A in Figure 5 represents a further reference voltage, derived from the correspondingly labelled point A in Figure 6.

The circuitry of Figure 6 represents the power side of the dimmer. In the particular embodiment being described, the dimmer has two separate channels, which can be controlled independently, and for that reason Figure 6 shows essentially two identical circuits. Both circuits operate in exactly the same way under control by the microprocessor 10, and accordingly only the first channel will be described in detail. It will be appreciated that the embodiment could have any number of channels, limited only by the power requirements and the capabilities of the microprocessor. In particular, it is envisaged that in addition to two channel dimmers, single channel and four channel dimmers may be provided.

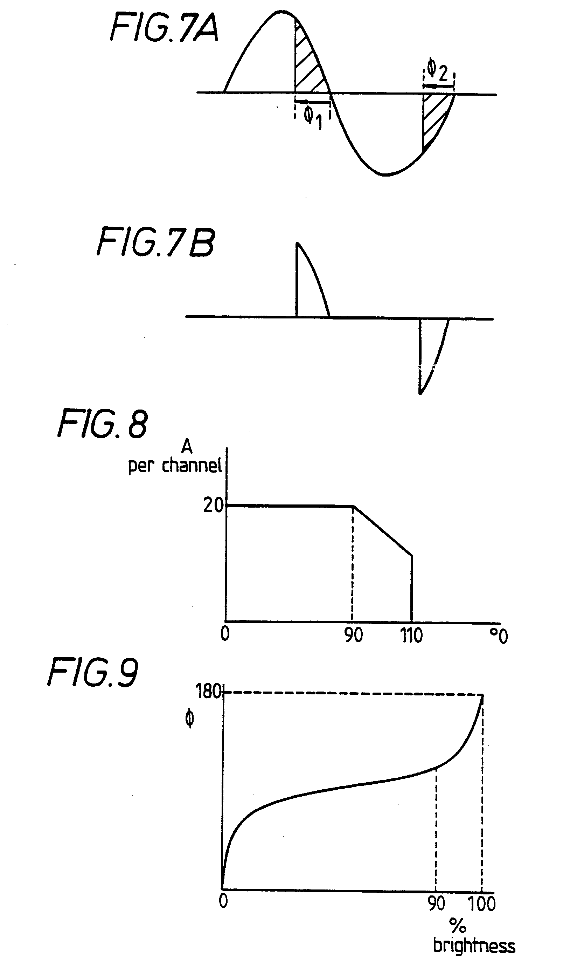

The lights which are to be controlled by the dimmer are attached to the output 56, and they draw power from the mains via a heavy duty choke 58. Tapped from the choke at tapping points 60, 62 is a control circuit generally indicated at 64, the purpose of which is to alter the characteristics of the power waveform that is being applied at the output 56. The control circuit 64 comprises a pair of back-to-back SCRs 66, 68. The first SCR 66 is fired by means of a logical 1 applied along the line S1, this signal being transmitted to the SCR gate via an opto-isolation element 70. Similarly, the second SCR 68 is fired by providing a logical 1 on the line S5, this signal being transmitted to the gate of the SCR 68 via a further opto-isolation element 72. The microprocessor 10 controls the timings of the firing signals on the lines S1 and S5 so that one of the SCRs fires during the first half cycle of the mains waveform, and the second during the second half cycle. This is illustrated generally in Figure 7A, in which the firing angle for the first SCR is shown as being ⌀₁, the firing angle for the second SCR being ⌀₂. In the present embodiment, ⌀₁ is always equal to ⌀₂. Figure 7B shows the resultant waveform which is actually applied to the output 56. It will be appreciated that when ⌀ = 0, the lamps attached to the output 56 are off, and when ⌀ = 180° they are turned fully on. In between, variation of the angle ⌀ by the microprocessor allows the lamps to be gradually faded up or down.

A feedback mechanism is provided by means of a wide band width non-saturating current transformer 74, which directly measures the current which is being applied to the load attached to the output 56. The transformer output is fed back as an analogue signal to the microprocessor 10 via the line E0, this line being part of the E-bus shown in Figure 1.

The microprocessor repeatedly samples the analogue signal on the line E0, and integrates over time to determine the mean square current being supplied to the output 56. Aliasing techniques are used to improve the accuracy of the integration estimate, in other words the times of the sample points are changed slightly on each cycle so that, over a number of cycles, very many different sample points are effectively used.

As will be appreciated, control of the output 76 on the second channel is substantially identical, the respective SCRs for the second channel being fired by means of signals supplied by the microprocessor along the signal lines S2 and S6.

The series of resistors generally indicated at 78 act as common scaling resistors for the two current transformers, the analogue feedback signal for the first channel being along the line E0 and the signal for the second being along the line E1. The common line E2/E3 is held at a constant reference potential by means of a potential divider, this reference potential being the same as the potential at the point A, previously referred to in connection with Figure 5.

Individual control of the separate half cycles, respectively by means of lines S1 and S5 for the first channel, and S2 and S6 for the second channel, means that neither SCR of the pair can accidentally become latched in the wrong half cycle. To ensure that this is so, the signal along the respective control line is turned off (i.e. turned to logical 0) very slightly before the 0 crossing point.

The microprocessor is programmed to control the firing angle ⌀ in dependence upon the feedback it receives both from the current transformer 74 (Figure 6) and the thermal element 40 (Figure 4). If the load which has been applied to the output 56 is too great, for example because too many lamps have been attached, the microprocessor automatically reduces the firing angle ⌀ by an appropriate amount, so progressively providing foldback of the half cycle current until an allowable current is reached. In the specific embodiment, the allowable current is 20 amps per channels, but of course for other embodiments this might vary according to the ratings of the devices used. The microprocessor also provides foldback of the half cycle current in the event that overheating is detected by the thermal sensor 40. Rather than switching the lamps off entirely to protect the devices within the dimmer, as was the case with the prior art, the present arrangement means that full control can still be achieved, albeit perhaps that the lamps may be prevented by the microprocessor from exceeding a certain fixed proportion of their maximum power output.

Both current and temperature feedback are in practice used together, in the manner illustrated in Figure 8. This shows a graph, in practice stored in the microprocessor memory, which defines the safe operating regime of the devices within the dimmer. Provided that the devices are operating in the region beneath the curve, there is no difficulty, and the lamps can be controlled by the user, either manually or under computer control, in the normal way by suitable alteration of the firing angle ⌀. If, however, the operating conditions are determined by the sensors to move out of the safe area, the microprocessor automatically and without operator intervention reduces the firing angle ⌀ to bring the temperature and/or current within the allowable bands. As will be seen from Figure 8, the microprocessor permits the full 20 amps per channel to be drawn up to a certain fixed temperature, say 90°C, following which as the temperature rises the allowable current per channel is gradually reduced. The device operating temperature is never permitted to exceed a certain maximum figure, say 110°C, and in the event that the temperature does exceed that amount the firing angle would be reduced to 0, so switching off the lamps, until the temperature had fallen sufficiently to enable the computer to resume control.

It is a particular feature of the described embodiment that it is capable of driving lamps of many different types. A fluorescent lamp will, for example, have very different fade up and fade down characteristics from those of a tungsten lamp, and if the same control sequence were to be applied to each different results would be obtained. Furthermore, because the lamps are being powered by a chopped sine wave, one does not expect to get the same visual amount of dimming if one reduces the firing angle from say 90 to 80° as one does if one reduces it from say 20 to 10°.

These effects are dealt with by storing within the microprocessor memory one or more lamp control tables, an example of which is shown in graphical form in Figure 9. The graph shows how, for a particular type of light, the brightness varies as a function of the firing angle ⌀. By making use of such a table, the dimmer is able to correct for lamp-specific effects, and to ensure that, where desired, a smooth and visually linear fade up or fade down is accomplished. The memory of the microprocessor 10 holds several such tables, each representative of a different type of lamp, and the individual tables may be chosen by means of the push-button switches 26 shown in Figure 2. The dimmer is accordingly general purpose, and can be wired up within a particular lighting system without regard for the type of lamps which are attached to the output 56 (provided of course that all of the lamps attached to any one channel are of the same type). All the user needs to do is to wire the system up, and then to choose the appropriate settings of the switches 26. Facilities may be provided for amending the lamp control tables, so that the user can edit them at will and so if he wishes design fade up or fade down sequences that in his opinion appear more visually attractive than those provided by the tables that are supplied. In addition, tables may be edited or new tables down-loaded via the serial link 22 (Figure 2).

Certain types of lamp (for example fluorescent lamps) do not light at all if the power supplied is too low. The information stored in the memory in respect of that type of lamp may specify that only, say, the top 80% of the curve is to be used. In other words, while a tungsten lamp might be dimmed up from a 0 starting base, a fluorescent lamp would be provided with at least enough current to ensure that it fires (e.g. 20%), and it would then be dimmed up from that point. The microprocessor allows for the hysteresis effect, by permitting the lamps to be dimmed back down beyond the initial striking point, if the particular type of lamp in question allows that to happen without turning off entirely.

The microprocessor is programmed to deal with many of the potential faults that could occur, without necessarily either switching itself off entirely or allowing a fuse to blow which is what often happens with the devices of the prior art. If a short circuit is detected on any one of the channels, for example because one of the lamps has failed, the current is electronically shut off to that channel by disabling the signals along the corresponding control lines S1, S5 or S2, S6.

A particular problem occurs when certain types of lamp are first powered up, in particular lamps which incorporate transformers and which accordingly tend to have reactance problems associated with them. When the current is initially applied to such a lamp, it acts as a dead short, and the resultant in-rush current is therefore very high at the start. In the prior art, this could cause fuses to blow or failures of trip switches. In the present embodiment, the current is continually being monitored via the current transformer 74, and if the user tries to switch on a large number of lamps all at once, the microprocessor causes them instead to fade up gradually over a short period of time (for example a second or so) so that the transient signals never become very high. This allows the use of lower rated elements. Because of the automatic nature of the feedback mechanism, the fade up time is automatically chosen by the microprocessor so as to keep the transients within limits, and this means that in practice the greater the number of lamps attached to a particular channel the slower will be the maximum fade up time that the microprocessor will allow.

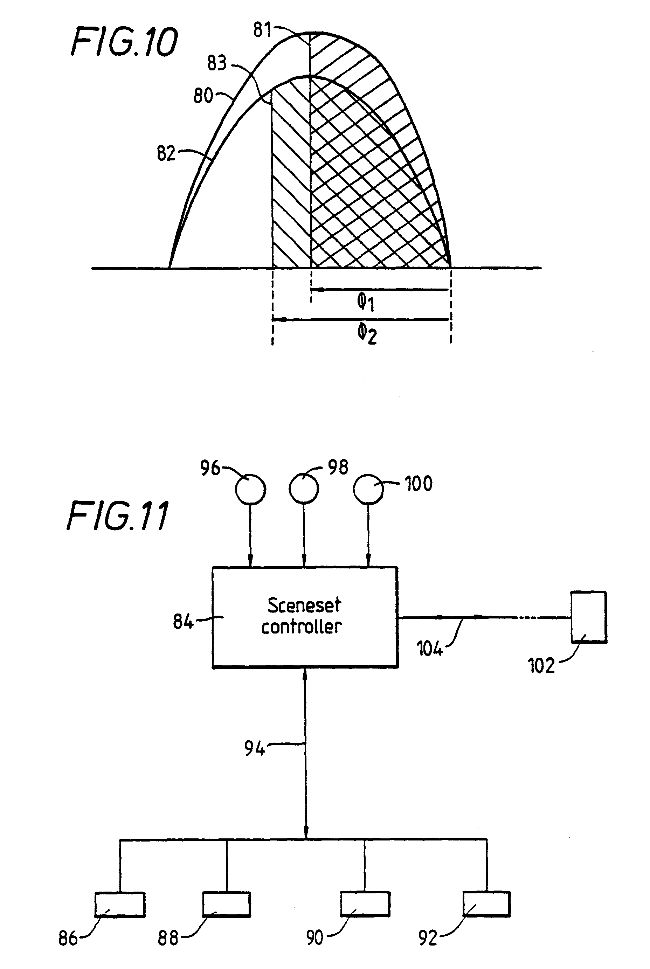

The present dimmer provides automatic voltage stabilisation, and this feature is illustrated with reference to Figure 10. Assume that at a particular mains voltage the mains waveform is as shown at 80, and that the appropriate SCR is being fired at the point 81 with a firing angle of ⌀₁. If the mains voltage now fluctuates downwards, so that the waveform becomes as shown at 82, the microprocessor compensates by increasing the firing angle to ⌀₂, so firing the SCR at the point 83. The difference between Ø₂ and ⌀₁ is calculated to ensure that the lamps which are being powered appear, at least approximately, to maintain their brightness level.

If one of the SCRs 66, 68 (Figure 6) fails, total failure of the lamp can be averted by the microprocessor. Under suitable conditions, the other SCR is then turned fully on or fully off, so ensuring that the lamps remain at least partially on until the problem can be solved.

All problems are noted by the microprocessor, and are displayed on the LEDs 28, 30, 32 (Figure 2). The microprocessor will also report the faults via the serial port 22 (also Figure 2).

The two channel device of the specific embodiment can be used as a single channel device, merely by linking the two channels together. Since each channel has an allowable current maximum of 20 amps, the combination provides a composite channel of up to 40 amps. Because both channels are controlled directly by the microprocessor 10, synchronicity between the two outputs is guaranteed so one has full power sharing. None of the devices within the dimmer are being strained by this power sharing, and full control is at all times retained.

Another way of operating the device of the present embodiment, is to use these two channels together to control a single three wire load. A fluorescent tube, for example, is a typical three wire load, so called because two wires are required for the operating current, and a third to provide power to the heaters. To operate such a lamp with the embodiment of the present invention, one simply controls the phase angle on one channel, and uses the other channel merely as a switch for switching the heaters on and off. When the lamp is fully powered, the heaters are switched off, but when it is desired to fade the lamp up or down the heaters are switched on.

Figure 11 shows how several of the devices as previously described may be connected together in a larger system. The system shown comprises a main or Sceneset (Trade Mark) controller 84 whose purpose is to control each of a plurality of individual dimmers 86, 88, 90, 92 via appropriate cabling 94. The Sceneset controller 84 is generally located in a convenient place within the building or other site. It receives input from a number of sources, for example from an external clock 96, from external photocells 98, and from external user-operable switches or a keyboard 100. The Sceneset controller is programmed by the user to control the individual dimmers, for example on a repeating daily cycle, the program depending upon the time and/or upon the detected ambient light levels. Typically, all of the individual dimmers will be controlled together, but there is no reason why in principle they should not be controlled independently provided that the system allows for suitable individual addressing protocols. Each of the dimmers 86, 88, 90, 92 reports back to the Sceneset controller via its respective I/O port 22 and the cabling 94, so enabling the user to receive full details of the status of each of the dimmers and of the lamp attached to them.

The Sceneset controller 84 may itself be provided with an I/O port so that it can communicate with a remote controller or programmer, for example via a modem or other remote link 104. Such a link enables the supplier of the system to interrogate the controller about any faults that might have been reported by any of the individual dimmers. In addition, the controller and possibly even the individual dimmers could be reprogrammed from the remote location. One could envisage for example a purchaser of the system receiving via the modem link a new lamp control table from the system supplier to enable him to plug in a new type of lamp that he wants to control.

## Claims

1. A power controller comprising waveform-altering means (64) arranged selectively to alter a power waveform at an output (56) of the controller, the waveform altering means (64) operating under control of control means (10), and feedback means (74,40) arranged to provide a feedback signal to the control means (10) in dependence upon a characteristic of the controller in use, characterised in that the feedback means (74,40) includes a temperature sensor (40) providing a feedback signal to alter the power waveform at the output (56) of the controller continuously in response to the temperature of the waveform altering means (64).

2. A controller as claimed in Claim 1 in which the temperature sensor (40) is in thermal contact with a heat sink of the controller.

3. A controller as claimed in any one of the preceding claims in which the feedback means (74,40) provides a feedback signal in dependence upon the current or power supplied, in use, at the output.

4. A controller as claimed in Claim 3 in which the feedback means includes a current transformer (74) connected to detect a current representative of the current passing, in use, at the output (56).

5. A controller as claimed in any one of the preceding claims in which the feedback signal is repeatedly samples and integrated over time, the integrated sample value being supplied to the control means (10).

6. A controller as claimed in Claim 5 in which aliasing techniques are used for the sampling.

7. A controller as claimed in any one of the preceding claims in which the waveform altering means (64) comprise chopper means arranged to supply a chopped AC waveform at the output (56), power control being achieved by varying the chopping phase.

8. A controller as claimed in Claim 7 in which the waveform altering means comprises an inverse pair of phase-controllable unidirectional devices (66,68).

9. A controller as claimed in Claim 8 in which the unidirectional devices are SCRs (66,68).

10. A controller as claimed in Claim 8 or Claim 9 in which the control means (10) separately controls the devices (66,68) for the respective half cycles.

11. A controller as claimed in any one of Claims 8 to 10 in which the control means (10) turns each respective device off towards the end of its respective half cycle, before the zero crossing point.

12. A controller as claimed in any one of Claims 8 to 11 in which the control means (10) includes means for detecting a fault in one of the unidirectional devices (66,68), and means for controlling the other accordingly in dependence upon the existence of such a fault.

13. A controller as claimed in Claim 3 in which the waveform altering means (64) shuts off the power at the output if the control means (10) determines that a short circuit is present at the output (56).

14. A controller as claimed in Claim 3 or Claim 13 in which the control means (10) limits the rate of power or current increase at the output (56) to ensure that transients within the controller always remain within acceptable limits.

15. A controller as claimed in Claim 3 or Claim 13 or Claim 14 in which the control means include voltage stabilisation means arranged to maintain power or current at the output substantially constant in spite of changes in voltage to a mains supply to the controller.

16. A controller as claimed in Claim 15 when dependent upon Claims 3 and 7 in which the voltage stabilisation means is arranged to vary the chopping phase to compensate for changes in the supply voltage.

17. A controller as claimed in any one of the preceding claims having a plurality of outputs (56,76) which are controlled by the control means as separate channels.

18. A controller as claimed in Claim 17 in which the outputs (56,76) are connectable together to provide a single channel having a higher rating, the waveform altering means still being arranged to operate under control of the control means (10), and the feedback means still being arranged to provide a feedback signal, when the outputs are connected as aforesaid.

19. A controller as claimed in Claim 17 or Claim 18 in which one channel is operable under the control of the control means (10) as a switch channel, whereby the switch channel and another channel can together be used to drive a three-wire-control lamp.

20. A controller as claimed in any one of the preceding claims in which the control means comprises a microprocessor (10), the memory of the microprocessor being arranged to store a table representative of the operating characteristics of a load to be controlled by the controller, and the microprocessor (10) being arranged to control the waveform altering means in dependence upon the table.

21. A controller as claimed in Claim 20 in which manually operable switch means (26) are provided to enable a user of the power controller to select between a plurality of said tables stored in memory.

22. A controller as claimed in any one of the preceding claims in which the power controller is a controllable dimmer for electric lamps.

23. An electric lamp control system comprising a plurality of dimmers (86,88,90,92), each as claimed in any one of Claims 1 to 22, connected to a master control unit (84), the master control unit being arranged to control the said plurality of dimmers in accordance with a pre-defined program and/or external stimuli.

24. A control system as claimed in Claim 23 in which the master control unit (84) is in two-way communication with the individual dimmers (86,88,90,92) .

25. A control system as claimed in Claim 23 or Claim 24 in which the master control unit (84) includes a modem link whereby it can be reprogrammed and/or interrogated from a remote location.

## Patentansprüche

1. Stromregler, umfassend eine die Wellenform ändernde Einrichtung (64), die angeordnet ist, um eine Stromwellenform an einem Ausgang (56) des Reglers selektiv zu ändern, wobei die die Wellenform ändernde Einrichtung (64) unter der Regelung der Regeleinrichtung (10) betrieben wird und eine Rückkopplungseinrichtung (74, 40) angeordnet ist, um ein Rückkopplungsignal der Regeleinrichtung (10) in Abhängigkeit von einer Charakteristik des verwendeten Reglers zuzuführen, **dadurch gekennzeichnet, daß** die Rückkopplungseinrichtung (74, 40) einen Temperatursensor (40) umfaßt, der ein Rückkopplungssignal liefert, um die Stromwellenform an dem Ausgang (56) des Reglers kontinuierlich in Abhängigkeit von der Temperatur der die Wellenform ändernden Einrichtung (64) zu ändern.

2. Regler nach Anspruch 1, **dadurch gekennzeichnet, daß** der Temperatursensor (40) in Thermokontakt mit einem Kühlkörper des Reglers steht.

3. Regler nach einem der vorhergehenden Ansprüche, **dadurch gekennzeichnet, daß** die Rückkopplungseinrichtung (74, 40) ein Rückkopplungsignal in Abhängigkeit von dem bei Verwendung dem Ausgang zugeführten Strom liefert.

4. Regler nach Anspruch 3, **dadurch gekennzeichnet, daß** die Rückkopplungseinrichtung einen Stromtransformator (74) umfaßt, der angeschlossen ist, um einen Strom zu erfassen, der bei Verwendung für den am Ausgang (56) durchlaufenden Strom repräsentativ ist.

5. Regler nach einem der vorhergehenden Ansprüche, **dadurch gekennzeichnet, daß** das Rückkopplungssignal wiederholt abgetastet und über der Zeit integriert wird, wobei der integrierte Abtastwert der Regeleinrichtung (10) zugeführt wird.

6. Regler nach Anspruch 5, **dadurch gekennzeichnet, daß** Aliastechniken für das Abtasten verwendet werden.

7. Regler nach einem der vorhergehenden Ansprüche, **dadurch gekennzeichnet, daß** die die Wellenform ändernde Einrichtung (64) Zerhakkermittel umfaßt, die angeordnet sind, um am Ausgang (56) eine zerhackte Wechselstromwellenform zuzuführen, wobei die Stromregelung durch Variieren der Zerhackphase erzielt wird.

8. Regler nach Anspruch 7, **dadurch gekennzeichnet, daß** die die Wellenform ändernde Einrichtung ein Umkehrpaar von phasensteuerbaren Unidirektionsgeräten (66 68) umfaßt.

9. Regler nach Anspruch 9, **dadurch gekennzeichnet, daß** die Unidirektionsgeräte SCRs (66, 68) sind.

10. Regler nach Anspruch 8 oder Anspruch 9, **dadurch gekennzeichnet, daß** die Regeleinrichtung (10) die Geräte (66, 68) für die jeweiligen Halbzyklen getrennt regelt.

11. Regler nach einem der Ansprüche 8 bis 10, **dadurch gekennzeichnet, daß** die Regeleinrichtung (10) gegen Ende des jeweiligen Halbzyklus jedes jeweilige Gerät vor dem Nullkreuzungspunkt abschaltet.

12. Regler nach einem der Ansprüche 8 bis 11, **dadurch gekennzeichnet, daß** die Regeleinrichtung (10) Mittel umfaßt, um einen Fehler in einem der Unidirektionsgeräte (66, 68) zu erfassen, und Mittel um das andere dementsprechend in Abhängigkeit von dem Vorliegen eines solchen Fehlers zu regeln.

13. Regler nach Anspruch 3, **dadurch gekennzeichnet, daß** die die Wellenform ändernde Einrichtung (64) den Strom am Ausgang abschaltet, wenn die Regeleinrichtung (10) bestimmt, daß ein Kurzschluß am Ausgang (56) vorhanden ist.

14. Regler nach Anspruch 3 oder Anspruch 13, **dadurch gekennzeichnet, daß** die Reglereinrichtung (10) die Stromrate oder den Stromanstieg am Ausgang (56) beschränkt, um sicherzustellen, daß Stromstöße in dem Regler immer innerhalb akzeptabler Grenzen bleiben.

15. Regler nach Anspruch 3 oder Anspruch 13 oder Anspruch 14, **dadurch gekennzeichnet, daß** die Regeleinrichtung eine Spannungsstabilisierungseinrichtung umfaßt, die angeordnet ist, um den Strom am Ausgang an der Netzversorgung zum Regler trotz der Spannungsänderungen im wesentlichen konstant zu halten.

16. Regler nach Anspruch 15 in Abhängigkeit von Anspruch 3 und 7, **dadurch gekennzeichnet, daß** die Spannungsstabilisierungseinrichtung angeordnet ist, um die Zerhackphase zu variieren, um Änderungen in der Versorgungsspannung auszugleichen.

17. Regler nach einem der vorhergehenden Ansprüche, der eine Vielzahl von Ausgängen (56, 76) aufweist, die durch die Reglereinrichtung als getrennte Kanäle geregelt werden.

18. Regler nach Anspruch 17, **dadurch gekennzeichnet, daß** die Ausgänge (56, 76) miteinander verbindbar sind, um einen einzigen Kanal mit einer höheren Auslegung zu schaffen, wobei die die Wellenform ändernde Einrichtung immer noch angeordnet ist, um unter der Regelung der Regeleinrichtung (10) zu arbeiten, und die Rückkopplungseinrichtung immer noch angeordnet ist, um ein Rückkopplungssignal zu liefern, wenn die Ausgänge wie vorstehend angegeben angeschlossen sind.

19. Regler nach Anspruch 17 oder Anspruch 18, **dadurch gekennzeichnet, daß** ein Kanal unter der Regelung der Regeleinrichtung (10) als Schaltkanal betätigbar ist, wodurch der Schaltkanal und ein weiterer Kanal zusammen zum Antrieb einer Dreileiter-Regellampe verwendet werden können.

20. Regler nach einem der vorhergehenden Ansprüche, **dadurch gekennzeichnet, daß** die Steuereinrichtung einen Mikroprozessor (10) umfaßt, wobei der Speicher des Mikroprozessors angeordnet ist, um eine Tabelle zu speichern, die für die Betriebscharakteristiken einer durch den Regler zu regelnden Last repräsentativ ist, und der Mikroprozessor (10) angeordnet ist, um die die Wellenform ändernde Einrichtung in Abhängigkeit von der Tabelle zu regeln.

21. Regler nach Anspruch 20, **dadurch gekennzeichnet, daß** die von Hand betätigbare Schaltereinrichtung (26) vorgesehen ist, um es einem Benutzer des Stromreglers zu gestatten, zwischen einer Vielzahl von in dem Speicher gespeicherten Tabellen zu wählen.

22. Regler nach einem der vorhergehenden Ansprüche, **dadurch gekennzeichnet, daß** der Stromregler ein regelbarer Dimmer für elektrische Lampen ist.

23. Elektrisches Lampenregelsystem, umfassend eine Vielzahl von Dimmern (86, 88, 90, 92) wie in einem der Ansprüche 1 bis 22 beansprucht, und angeschlossen an eine Hauptregeleinheit (84), wobei die Hauptregeleinheit angeordnet ist, um die Vielzahl von Dimmern gemäß einem vorbestimmten Programm und/oder äußeren Einflüssen zu regeln.

24. Regelsystem nach Anspruch 23, **dadurch gekennzeichnet, daß** die Hauptregeleinheit (84) eine Zweiwege-Verbindung mit den einzelnen Dimmern (86, 88, 90, 92) ist.

25. Regelsystem nach Anspruch 23 oder Anspruch 24, **dadurch gekennzeichnet, daß** die Hauptregeleinheit (84) eine Modemverbindung umfaßt, wodurch sie aus der Ferne neu programmiert und/oder abgefragt werden kann.

## Revendications

1. Dispositif de commande de puissance comprenant un moyen de modification de forme d'onde (64) disposé de manière sélective pour modifier une forme d'onde d'alimentation au niveau d'une sortie (56) du dispositif de commande, le moyen de modification de forme d'onde (64) fonctionnant sous le contrôle d'un moyen de commande (10), et un moyen de rétroaction (74, 40) disposé de sorte à appliquer un signal de rétroaction au moyen de commande (10) en fonction d'une caractéristique du dispositif de commande en utilisation, caractérisé en ce que le moyen de rétroaction (74, 40) comprend un capteur de température (40) appliquant un signal de rétroaction pour modifier la forme d'onde de puissance à la sortie (56) du dispositif de commande de manière continue en réponse à la température du moyen de modification de forme d'onde (64).

2. Dispositif de commande selon la revendication 1, dans lequel le capteur de température (40) est en contact thermique avec un radiateur du dispositif de commande.

3. Dispositif de commande selon l'une quelconque des revendications précédentes, dans lequel le moyen de rétroaction (74, 40) applique une signal de rétroaction en fonction du courant ou de la puissance fournie, en utilisation, à la sortie.

4. Dispositif de commande selon la revendication 3, dans lequel le moyen de rétroaction comprend un transformateur de courant (74) relié, pour détecter un courant représentatif du courant circulant en utilisation, au niveau de la sortie (56).

5. Dispositif de commande selon l'une quelconque des revendications précédentes, dans lequel le signal de rétroaction est échantillonné périodiquement et intégré sur le temps, la valeur de l'échantillon intégré étant fournie au moyen de commande (10).

6. Dispositif de commande selon la revendication 5, dans lequel les techniques de repliement de spectre sont utilisées pour l'échantillonnage.

7. Dispositif de commande selon l'une quelconque des revendications précédentes, dans lequel le moyen de modification de forme d'onde (64) comprend un moyen hacheur disposé pour fournir une forme d'onde de courant alternatif haché au niveau de la sortie (56), la commande de puissance étant réalisée en faisant varier la phase de hachage.

8. Dispositif de commande selon la revendication 7, dans lequel le moyen de modification de forme d'onde comprend une paire tête-bêche de dispositif unidirectionnel dont la phase peut être commandée (66, 68).

9. Dispositif de commande selon la revendication 8, dans lequel les dispositifs unidirectionnels sont des thyristors (66, 68).

10. Dispositif de commande selon la revendication 8 ou la revendication 9, dans lequel le moyen de commande (10) commande séparément les dispositifs (66, 68) pour les demi-cycles respectifs.

11. Dispositif de commande selon l'une quelconque des revendications 8 à 10, dans lequel le moyen de commande (10) désactive chaque dispositif respectif vers la fin de son demi-cycle respectif, avant le point de passage par 0.

12. Dispositif de commande selon l'une quelconque des revendications 8 à 11, dans lequel le moyen de commande (10) comprend des moyens pour détecter une panne dans l'un des dispositifs unidirectionnels (66, 68) et des moyens pour commander l'autre en conséquence en fonction de l'existence d'une telle panne.

13. Dispositif de commande selon la revendication 3, dans lequel le moyen de modification de forme d'onde (64) coupe la puissance à la sortie si le moyen de commande (10) détermine qu'un court-circuit est présent à la sortie (56).

14. Dispositif de commande selon la revendication 3 ou la revendication 13, dans lequel le moyen de commande (10) limite la vitesse d'augmentation de puissance ou de courant au niveau de la sortie (56) afin d'assurer que les transitoires dans le dispositif de commande restent toujours dans des limites acceptables.

15. Dispositif de commande selon la revendication 3 ou la revendication 13 ou la revendication 14, dans lequel le moyen de commande comprend un moyen de stabilisation de tension disposé pour maintenir la puissance ou le courant sensiblement constant au niveau de la sortie malgré les variations de tension d'alimentation secteur destiné au dispositif de commande.

16. Dispositif de commande selon la revendication 15 lorsqu'elle dépend des revendications 3 et 7, dans lequel le moyen de stabilisation de tension est configuré de façon à faire varier la phase de hachage pour compenser les variations de la tension d'alimentation.

17. Dispositif de commande selon l'une quelconque des revendications précédentes possédant une pluralité de sorties (56, 76) qui sont commandées par le moyen de commande en tant que canaux séparés.

18. Dispositif de commande selon la revendication 17, dans lequel les sorties (56, 76) peuvent être connectées ensemble afin d'offrir un canal unique possédant une caractéristique nominale plus élevée, le moyen de modification de forme d'onde étant toujours configuré de sorte à fonctionner sous le contrôle du moyen de commande (10), et le moyen de rétroaction étant toujours configuré pour fournir un signal de rétroaction, lorsque les sorties sont reliées telles que précitées.

19. Dispositif de commande selon la revendication 17 ou la revendication 18, dans lequel chaque canal peut fonctionner sous le contrôle du moyen de commande (10) en tant que canal de commutation, au moyen duquel le canal de commutation et l'autre canal peuvent être utilisés ensemble pour piloter une lampe commandée par trois fils.

20. Dispositif de commande selon l'une quelconque des revendications précédentes, dans lequel le moyen de commande comprend un microprocesseur (10), la mémoire du microprocesseur étant configurée pour mémoriser un tableau représentatif des caractéristiques de fonctionnement de charge à commander au moyen du dispositif de commande, et le microprocesseur (10) étant configuré pour commander le moyen de modification de forme d'onde en fonction du tableau.

21. Dispositif de commande selon la revendication 20, dans lequel des moyens de commutations actionnables à la main (26) sont prévus pour permettre qu'un utilisateur du dispositif de commande de puissance choisisse parmi une pluralité desdits tableaux stockés en mémoire.

22. Dispositif de commande selon l'une quelconque des revendications précédentes, dans lequel le dispositif de commande de puissance est un variateur pouvant être commandé pour des lampes électriques.

23. Système de commande de lampes électriques comprenant une pluralité de variateurs (86, 88, 90, 92), chacun selon l'une quelconque des revendications 1 à 22, reliés à une unité de commande maître (84), l'unité de commande maître étant configurée pour commander ladite pluralité de variateurs selon un programme prédéfini et/ou des stimuli externes.

24. Système de commande selon la revendication 23, dans lequel l'unité de commande maître (84) est en communication duplex avec les variateurs individuels (86, 88, 90, 92).

25. Système de commande selon la revendication 23 ou la revendication 24, dans lequel l'unité de commande maître (84) comprend une liaison par modem au moyen de laquelle elle peut être reprogrammée et/ou interrogée à partir d'un site déporté.
